(19) Europäisches Patentamt
European Patent Office
Office européen des brevets

(11) Veröffentlichungsnummer: **0 002 202**
**B1**

(12) **EUROPÄISCHE PATENTSCHRIFT**

(45) Veröffentlichungstag der Patentschrift: **31.03.82**

(51) Int. Cl.³: **C 07 F 9/09**, C 07 F 9/10, A 01 H 1/02

(21) Anmeldenummer: **78101365.1**

(22) Anmeldetag: **14.11.78**

(54) **Phospholipidartige Verbindungen, Verfahren zu ihrer Herstellung und deren Verwendung.**

(30) Priorität: **24.11.77 DE 2752553**

(43) Veröffentlichungstag der Anmeldung: **13.06.79 Patentblatt 79/12**

(45) Bekanntmachung des Hinweises auf die Patenterteilung: **31.03.82 Patentblatt 82/13**

(84) Benannte Vertragsstaaten: **BE CH FR GB LU NL SE**

(56) Entgegenhaltungen:
**DE-A-2 033 357**
**DE-A-2 258 614**

**Die Akte enthält technische Angaben, die nach dem Eingang der Anmeldung eingereicht wurden und die nicht in dieser Patentschrift enthalten sind.**

(73) Patentinhaber: **Max-Planck-Gesellschaft zur Förderung der Wissenschaften e.V., Bunsenstrasse 10, D-3400 Göttingen (DE)**

(72) Erfinder: **Eibl, Hansjörg, Dr., Steinweg 51, D-3406 Bovenden (DE)**

(74) Vertreter: **Weickmann, Heinrich, Dipl.-Ing. et al, Postfach 860 820 Möhlstrasse 22, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 002 202 B1

Phospholipidartige Verbindungen, Verfahren zu ihrer Herstellung und deren Verwendung

Die Erfindung betrifft eine neue Verbindungsklasse, die den Phospholipiden nahe verwandt ist, ein Verfahren zu ihrer Herstellung sowie ihre Verwendung.

Bei Kreuzungsversuchen mit pflanzlichen oder auch tierischen Zellen ist es sehr schwer, die Vereinigung von verschiedenen Zellen zu erreichen, da alle Zellen in der Regel negativ geladen sind und negative Oberflächenladungen in der Größenordnung von 30 bis 35 mVolt aufweisen. Wenn es gelingen würde, Zellen nicht nur zu neutralisieren, sondern sogar umzuladen, so könnte man auf diese Weise eine künstliche Sexualität einführen und so spezifische Fusionen zwischen zwei verschiedenen Zellen, z. B. von Protoplasten, erhalten. Protoplasten entstehen aus Pflanzenzellen durch Einwirkung von Enzymen (Cellulasen), die die äußere Zellwand ablösen. Die milde Behandlung läßt die eigentliche Zelle mit umgebender Plasmamembran, den Protoplasten, unverändert.

Unspezifische Fusionen von Protoplasten sind bereits bekannt. Bei unspezifischen Fusionen zwischen zwei negativ geladenen Protoplasten A und B erhält man jedoch bevorzugt homologe Fusionen:

A + A }
B + B } homolog

A + B = heterolog.

Unter spezifischer Fusion versteht man eine Fusion zwischen A und B. Die Spezifität kann erreicht werden, indem man eine künstliche Sexualität einführt durch Erzeugung einer positiven Überschußladung auf Protoplast A, der dann beispielsweise mit dem negativ geladenen Protoplast fusioniert wird. Unter positiver Überschußladung soll dabei eine positive Oberflächenladung der Membrangrenzfläche verstanden werden. Protoplasten besitzen natürlicherweise eine negative Oberflächenladung, d. h. eine negative Überschußladung. Sie wandern in einem elektrischen Feld zur Anode, zur positiven Elektrode. Durch die Umladung mit den erfindungsgemäßen Phospholipiden erhalten die Protoplasten nun eine positive Oberflächenladung, d. h. eine positive Überschußladung. Sie wandern nun in einem elektrischen Feld zur Kathode, zur negativen Elektrode.

Es besteht daher ein Bedarf nach Mitteln und Methoden, welche die Umladung von Zelloberflächen ermöglichen. Darüber hinaus besteht generell ein Bedarf an Mitteln, welche dazu geeignet sind, die Eigenschaften von Zellmembranen zu verändern, insbesondere durch Veränderung der Ladung. Von besonderer Bedeutung ist dabei, daß derartige Verbindungen biologisch abbaubar sein müssen.

Der Erfindung liegt daher die Aufgabe zugrunde, eine neue Verbindungsklasse zu schaffen, die aufgrund ihrer chemischen Struktur besondere Affinität zur Zellwand besitzt und daher zur Modifizierung von Zellmembranen und insbesondere zu ihrer Umladung geeignet ist und darüber hinaus auch von der Zelle abgebaut werden kann.

Gelöst wird diese Aufgabe erfindungsgemäß durch die Schaffung von Verbindungen der allgemeinen Formel I

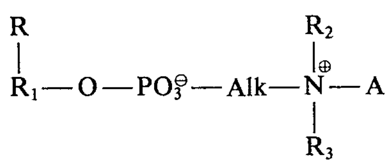
(I)

worin

Alk eine geradkettige, verzweigte oder cyclische Alkylgruppe mit 2 bis 12 C-Atomen,

A die Gruppe

$-NH_2$ oder 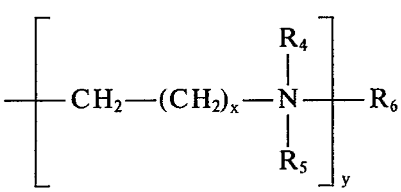

$R_1$ den Rest eines ein- oder mehrwertigen aliphatischen primären oder sekundären Alkohols, dessen gegebenenfalls vorhandene weitere OH-Gruppen verestert oder veräthert vorliegen und die Ester- oder Äthergruppen 1 bis 26 C-Atome und gegebenenfalls eine oder mehrere

Kohlenstoff-Mehrfachbindungen enthalten, wobei $R_1$ insgesamt 6 bis 136 C-Atome enthält,
$R_2$, $R_4$ und $R_6$ Wasserstoff oder eine Alkylgruppe mit 1 bis 4 C-Atomen,
$R_3$ und $R_5$ Wasserstoff oder eine Alkylgruppe mit 1 bis 4 C-Atomen oder ein freies Elektronenpaar,
x und y unabhängig voneinander je die Zahl 1, 2, 3, 4 oder 5 bedeuten.

Wenn $R_1$ den Rest eines mehrwertigen Alkohols darstellt, so können die veresterten oder verätherten OH-Gruppen auch zu Ringstrukturen verbunden sein, beispielsweise durch Verätherung mit einem Keton, wie Dipentadecylketon. In diesem Falle ergeben sich bei benachbarten OH-Gruppen 5gliedrige Ringe, die zwei Sauerstoffatome enthalten.

Die Äther- und Estergruppen können gesättigte oder ungesättigte geradkettige, verzweigte oder ringförmige Alkylgruppen, Arylgruppen, insbesondere Phenyl- und Naphthylgruppen, sowie Aralkylgruppen, in denen die Summe der C-Atome im Aryl- und in dem oder den Alkylresten bis zu 26 C-Atome beträgt, sein. Unter den Ester- oder Äthergruppen am Rest $R_1$ werden solche bevorzugt, in denen die Alkyl-, Aryl- oder Aralkylgruppen 8 bis 22 C-Atome aufweisen. Besonders bevorzugt werden Verbindungen, in denen $R_1$ sich von Propan, Diol oder Glycerin ableitet. Beispiele für andere geeignete mehrwertige Alkohole sind Erythrit, Pentite, Hexite usw.

Bevorzugt werden im Rahmen der Erfindung ferner solche Verbindungen, in denen $R_2$, $R_3$, $R_4$, $R_5$ und $R_6$ Alkylgruppen, wie Methyl-, Äthyl-, Propyl-, Isopropyl-, n-Butyl-, Isobutyl- oder tert.-Butyl-gruppen darstellen.

Das erfindungsgemäße Verfahren zur Herstellung der oben beschriebenen neuen Verbindungen ist dadurch gekennzeichnet, daß man

a) eine Verbindung der allgemeinen Formel II

$$R_1{-}OH \qquad (II)$$

mit $POCl_3$ in an sich bekannter Weise umsetzt,

b) das Reaktionsprodukt von Stufe a) in an sich bekannter Weise mit einer Verbindung der allgemeinen Formel III

$$HO{-}Alk{-}Hal \qquad (III)$$

in der Hal Cl, Br oder J bedeutet, umsetzt,

c) das Reaktionsprodukt von Stufe b) mit einer Verbindung der allgemeinen Formel IV

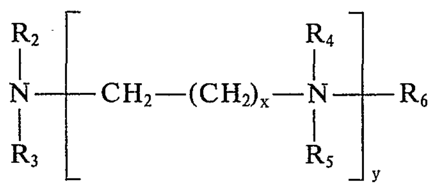

(IV)

oder mit Hydrazin umsetzt, wobei $R_1$, $R_2$, $R_3$, $R_4$, $R_5$, $R_6$, Alk, x und y die oben angegebenen Bedeutungen haben, und gegebenenfalls

d) die erhaltene Verbindung der allgemeinen Formel I, in der $R_3$ oder/und $R_5$ ein freies Elektronenpaar bedeuten, mit einem Alkylierungsmittel peralkyliert.

Unter den Verbindungen der allgemeinen Formel III werden die bromhaltigen bevorzugt. Hinsichtlich des Rests Alk werden bei den geradkettigen und verzweigten Resten solche mit 2 bis 4 C-Atomen, bei den cyclischen Gruppen solche mit 6 C-Atomen bevorzugt. Besonders bevorzugt wird eine Alkylgruppe mit 2 C-Atomen.

Die Umsetzung von Phosphoroxychlorid mit der Verbindung der allgemeinen Formel II in Stufe a) wird vorzugsweise in einem inerten organischen Lösungsmittel durchgeführt. Beispiele für geeignete Lösungsmittel sind halogenierte Kohlenwasserstoffe, wie Chloroform und Tetrachlorkohlenstoffe, aromatische Kohlenwasserstoffe, wie Benzol oder Toluol, und aliphatische Kohlenwasserstoffe, wie Petroläther. Ebenfalls geeignet sind cyclische organische Lösungsmittel, wie Tetrahydrofuran. Bevorzugt werden Trichloräthylen und Tetrahydrofuran, da hierbei die entstehenden Salze, wie Triäthylaminhydrochlorid, eine sehr geringe Löslichkeit aufweisen und daher ausfallen und durch Abfiltrieren leicht abgetrennt werden können. Die Umsetzung sollte möglichst unter Feuchtigkeitsausschluß durchgeführt werden. Geeignete Temperaturen liegen im Bereich von −10 bis 50°C, vorzugsweise zwischen 10 und 30°C. Je nach den verwendeten Substanzen und Lösungsmitteln kommen jedoch in manchen Fällen auch darüber- und darunterliegende Temperaturen zur Anwendung.

Die Umsetzung wird vorzugsweise in Anwesenheit einer inerten organischen Base, wie Triäthylamin, Pyridin oder Chinolin durchgeführt.

Zweckmäßig löst man das Phosphoroxychlorid in dem inerten Lösungsmittel und gibt die Base zu. Dann wird die Verbindung der allgemeinen Formel II, zweckmäßig ebenfalls in einem inerten Lösungsmittel gelöst, zugesetzt. Dies erfolgt vorzugsweise durch Eintropfen unter Rühren. Da die Umsetzungen glatt und eindeutig verlaufen, kann die Temperatur von Fall zu Fall so gewählt werden, daß die Umsetzung direkt nach dem Eintropfen beendigt ist, was durch dünnschichtchromatographische Untersuchung leicht festgestellt werden kann.

Die Stufe b) läuft glatt ab, wenn man das Produkt der Stufe a) mit der Verbindung der allgemeinen Formel III mischt. Vorzugsweise versetzt man hierzu das Reaktionsgemisch mit einer Lösung der Verbindung der allgemeinen Formel III in Gegenwart einer organischen Base, wie Triäthylamin. Bevorzugt erfolgt die Umsetzung bei Temperaturen zwischen 20 und 60°C unter Verwendung von Tetrahydrofuran als Lösungsmittel. Je nach den angewandten Bedingungen beträgt die Reaktionsdauer im allgemeinen zwischen etwa 20 und 120 Minuten.

Unter den bevorzugten Bedingungen fällt das Hydrohalogenid der Base aus und wird entfernt. Zur Erzielung bester Ausbeuten wird das Hydrochlorid nachgewaschen und die Waschflüssigkeit der Reaktionslösung wieder zugegeben. Dann wird das Lösungsmittel entfernt. Der Rückstand wird dann gegebenenfalls in Tetrahydrofuran gelöst und mit einer schwach alkalischen wäßrigen Lösung, beispielsweise Natriumbicarbonat in Wasser hydrolysiert, wobei vorzugsweise der pH-Wert zwischen 5 und 7 gehalten wird. Dann wird mit einem organischen Lösungsmittel, wie Diisopropyläther oder Chloroform, extrahiert. Man erhält so die Natriumsalze der Alkylphosphatidsäuren, die sich gut umkristallisieren lassen.

Alternativ lassen sich die Reaktionsprodukte von Stufe b) auch herstellen, indem man entsprechende Ringverbindungen der in der DE-OS 2 752 125 der gleichen Anmelderin beschriebenen allgemeinen Formel I mit Alkylhalogeniden, wie dort beschrieben, spaltet.

Die Reaktion in Stufe c), also die Umsetzung des Produkts von Stufe b) mit der Aminobase, erfolgt ebenfalls im allgemeinen in polaren Lösungsmitteln, wie beispielsweise Chloroform, primären, sekundären oder tertiären Alkoholen, Dimethylformamid, Acetonitril, Nitromethan oder Wasser bzw. Gemischen davon. Für die Umsetzung kommen je nach der Empfindlichkeit der verwendeten Ausgangssubstanzen alle Temperaturen im Bereich zwischen dem Festpunkt und dem Siedepunkt des verwendeten Lösungsmittels bzw. Lösungsmittelgemisches in Betracht. Bevorzugt erfolgt die Umsetzung bei Temperaturen zwischen Zimmertemperatur und dem Siedepunkt des Lösungsmittels. So sind bei 50°C die Umsetzungen in der Regel nach 2 bis 8 Stunden beendet. Das Reaktionsprodukt wird anschließend isoliert und kann umkristallisiert werden. Auch eine chromatographische Reinigung ist möglich. Die Ausbeuten liegen im allgemeinen über 50% der Theorie, bezogen auf Digylcerid als Ausgangsprodukt. Das in Beispiel 1, Stufe c) beschriebene Verfahren zur Aminierung hat sich auch bestens zur Aminierung mit monofunktionellen Basen, wie Trimethylamin, Triäthylamin, Dimethylamin, Methylamin und Ammoniak bewährt. Es entstehen dabei neutrale Phospholipide.

Die erzielten hohen Ausbeuten an gewünschtem Produkt sind überraschend, da bei den vielen funktionellen Gruppen in den Reaktionspartnern das glatte Ablaufen der Reaktion in der gewünschten Richtung nicht vorhersehbar war.

Die Stufe d), d. h. die Peralkylierung des Produkts von Stufe c), ermöglicht es, die Alkalität der Verbindung gewünschtenfalls zu erhöhen, wenn für das zweite oder folgende Stickstoffatom im Molekül ein pH-Wert über 6 gewünscht wird. Dies ist dann von Bedeutung, wenn die Anwendung der Verbindungen nicht in saurem, sondern in neutralem oder alkalischem Medium erfolgen soll. Die Alkylierung erfolgt zweckmäßig in an sich bekannter Weise durch Umsetzung mit Methyljodid oder anderen geeigneten Alkylierungsmitteln unter den dem Fachmann dafür bekannten Bedingungen.

Bevorzugt erfolgt die Alkylierung jedoch bei pH-Werten zwischen 7 und 11 mit einem Alkylierungsmittel in Tetrahydrofuran in Gegenwart einer verdünnten wäßrigen Alkalicarbonatlösung. Besonders bevorzugt wird 0,5molare Natriumbicarbonatlösung verwendet und als Methylierungsmittel Methyljodid eingesetzt. Diese neue Ausführungsform der Alkylierung verläuft besonders glatt und rasch und eignet sich auch generell zur Alkylierung von Stickstoffatomen, wie sie in Kephalin vorkommen.

Es ist zwar eine scheinbar ähnliche Verfahrensweise schon bekannt, bei der das zu alkylierende Produkt in Tetrahydrofuran jedoch mit festem Natriumcarbonat versetzt wird. Hierbei dauert die Umsetzung etwa 2 Wochen und es entstehen Nebenprodukte, die eine aufwendige Reinigung erforderlich machen.

Wie bereits erwähnt, zeichnen sich die erfindungsgemäßen Verbindungen durch die Fähigkeit zur Veränderung von Zellmembranen aus. Insbesondere können sie die Ladung der Zelloberflächen verändern und machen es dadurch möglich, Zellfusionen zu bewirken, indem normale Zellen mit umgeladenen Zellen zusammengebracht werden, die durch Behandlung mit den erfindungsgemäßen Verbindungen leicht gewonnen werden können. Dies kann zur Neuzüchtung z. B. von Pflanzenhybriden, ausgenützt werden.

Außerdem besitzen die erfindungsgemäßen Verbindungen wertvolle pharmakologische Eigenschaften, da die Lecithin analogen Verbindungen als stark oberflächenaktive Stoffe die Permeabilitätsverhältnisse in Biomembranen ändern und daher sowohl selbst die Zellwand zu durchdringen vermögen, als auch anderen Arzneimitteln oder biologisch aktiven Substanzen den

Eintritt in die Zellmembran ermöglichen können, wobei die erfindungsgemäßen Verbindungen Vesikel bilden, in denen die zu transportierenden Stoffe eingeschlossen sind. Ferner können die Rezeptoren an den Zellwänden, z. B. solche für Hormone, spezifisch geändert und dadurch die Aufnahmefähigkeit für Hormone und andere Verbindungen nach Wunsch erhöht oder erniedrigt werden. Außerdem besitzen sie immunstimulierende Eigenschaften. Auch ist eine Wirksamkeit gegen Infektionen zu erwarten, da durch Veränderung der Permeabilitätsverhältnisse an den Zellmembranen die Angreifbarkeit durch Mikroorganismen und Viren herabgesetzt werden kann.

Da die erfindungsgemäßen Verbindungen sowohl lipophile als auch hydrophile Gruppen sowie saure und basische Gruppen im gleichen Molekül aufweisen, stellen sie gute Emulgatoren dar. Aufgrund ihrer engen Verwandtschaft mit natürlichen Phosphatiden sind sie auf biologische Weise abbaubar und daher auch als Emulgatoren in Nahrungsmitteln, in Waschmitteln und dergleichen, verwendbar.

Die folgenden Beispiele erläutern die Erfindung weiter.

A. Erfindungsgemäßes Verfahren allgemein.

## Beispiel 1

### Stufe a)

10 ml Trichloräthylen und 6,6 g $POCl_3$ (0,044 Mol) werden in einem Eisbad bei 0 bis 5° C mit 0,04 Mol eines primären oder sekundären Alkohols der allgemeinen Formel II — gelöst in 40 ml Trichloräthylen und 9 g Triäthylamin — versetzt. Handelt es sich bei dem Alkohol um ein Diacylglycerin, so wird zur Vermeidung von Acylwanderung das Acylierungsgemisch nacheinander mit 9 g Triäthylamin in 10 ml Trichloräthylen und dann sofort mit dem Diacylglycerin in 30 ml Trichloräthylen versetzt. Man verwendet 25 ml Toluol zum Nachwaschen. Man ersetzt das Eisbad durch ein Wasserbad bei 20° C. Die Reaktion ist schon nach 20 Minuten bei 20° C beendet.

### Stufe b)

Bei 20° C gibt man zu dem Reaktionsgemisch von Stufe a) 0,048 Mol Verbindung III, z. B. gelöst in 75 ml Tetrahydrofuran und 13 g Triäthylamin und verwendet 25 ml Tetrahydrofuran zum Nachwaschen. Nach 20 Minuten bei 35° C ist die Reaktion abgelaufen. Man filtriert, wäscht in 50 ml Toluol nach und engt ein. Die Hydrolyse erfolgt durch Zusatz von nacheinander 30 ml Eiswasser, nach 2 Minuten 30 ml 1 M Natriumacetat und nach weiteren 2 Minuten 90 ml Tetrahydrofuran. Nach 12 Stunden ist die Hydrolyse beendet. Es entsteht praktisch nur ein Produkt.

### Stufe c)

B. 0,04 Mol Produkt von Stufe b) ($\beta$-Bromäthylester) werden in 90 ml $CHCl_3$ gelöst, mit 150 ml Isopropanol sowie 200 ml 40% N,N,N,N-Tetramethyläthylendiamin in Wasser versetzt. Entsprechend können hier die anderen Verbindungen der Formel IV, beispielsweise Diaminoäthan, Diaminopropan usw., oder Hydrazin eingesetzt werden. Bei 50°C ist die Reaktion nach 24 Stunden abgeschlossen. Nach Zusatz von Toluol engt man ein, bis die Wasserphase zurückbleibt und fällt das Produkt durch Acetonitril. Die Reinigung erfolgt durch Chromatographie an Kieselgel.

## Beispiel 2

### Umsatz der $\beta$-Bromäthylester mit Diäthylentriamin

$\beta$-Bromäthylester von Beispiel 1 (0,04 Mol) wird in 90 ml $CHCl_3$ gelöst, mit 150 ml Isopropanol sowie mit 200 ml 40% Diäthylentriamin versetzt. Entsprechend können hier andere Polyamine, beispielsweise Triäthylentetramin, Tetraäthylenpentamin, eingesetzt werden. Nach Zusatz von Toluol engt man ein, bis die Wasserphase zurückbleibt und fällt das Produkt durch Acetonitril. Die Reinigung erfolgt durch Chromatographie an Kieselgel.

## Beispiel 3

### Permethylierung der Aminofunktionen

0,01 Mol des aminierten Produkts, beispielsweise 7,9 g von Verbindung 5, werden in 50 ml Tetrahydrofuran gelöst und mit 50 ml 1 M $NaHCO_3$ (8,4 g gelöst in 100 ml $H_2O$) versetzt. Unter Rühren

werden 30 g Methyljodid zugegeben: Die Reaktion ist nach 60 Minuten vollständig. Man extrahiert mit Chloroform und erhält das reine Produkt; gelegentlich ist zur Reinigung auch eine Chromatographie notwendig.

Nach den Verfahren der Beispiele 1 bis 3 wurden folgende Verbindungen hergestellt:

4. 1,2-Dipentadecylketon-glycerin-3-phosphoryl-(N-äthylamino)-äthanolamin

$C_{38}H_{79}N_2O_6P$ (691,0)

| | | | | |
|---|---|---|---|---|
| Berechnet: | C 66,05%, | H 11,52%, | N 4,05%, | P 4,48%; |
| gefunden: | C 66,11%, | H 11,63%, | N 4,03%, | P 4,70%. |

5. Stearoyl-propandiol-(1,3)-phosphoryl-(N,N-dimethyl-N-[N',N'-dimethyl]-äthylamino)-äthanolammonium

$C_{29}H_{61}N_2O_6P$ (562,8)

| | | | | |
|---|---|---|---|---|
| Berechnet: | C 61,67%, | H 10,89%, | N 4,96%, | P 5,48%; |
| gefunden: | C 60,41%, | H 10,73%, | N 4,60%, | P 5,45%. |

6. Palmitoyl-propandiol-(1,3)-phosphoryl-(N,N-dimethyl-N-[N',N'-dimethyl]-äthylamino)-äthanolammonium

$C_{27}H_{57}N_2O_6P$ (536,7)

Nachweis durch DC-Vergleich mit 5.

7. Oleoyl-propandiol-(1,3)-phosphoryl-(N,N-dimethyl-N-[N',N'-dimethyl]-äthylamino)-äthanolammonium

$C_{29}H_{59}N_2O_6P$ (562,8)

Nachweis durch DC-Vergleich mit 5.

8. 1,2-Dipalmitoyl-sn-glycerin-3-phosphoryl-(N,N-dimethyl-N-[N',N'-dimethyl]-äthylamino)-äthanolammonium

$C_{43}H_{87}N_2O_8P$ (791,2)

| | | | | |
|---|---|---|---|---|
| Berechnet: | C 65,28%, | H 11,09%, | N 3,54%, | P 3,92%; |
| gefunden: | C 64,99%, | H 11,02%, | N 3,40%, | P 4,01%. |

9. 1,3-Dipalmitoyl-glycerin-2-phosphoryl-(N,N-dimethyl-N-[N',N'-dimethyl]-äthylamino)-äthanolammonium

$C_{43}H_{87}N_2O_8P$ (791,2)

Nachweis durch DC-Vergleich mit 8.

10. 1,2-Dimyristoyl-sn-glycerin-3-phosphoryl-(N,N-dimethyl-N-[N',N'-dimethyl]-äthylamino)-äthanolammonium

$C_{39}H_{79}N_2O_8P$ (735,0)

Nachweis durch DC-Vergleich mit 8.

11. 1,3-Dimyristoyl-glycerin-2-phosphoryl-(N,N-dimethyl-N-[N',N'-dimethyl]-äthylamino)-äthanolammonium

$C_{39}H_{79}N_2O_8P$ (735,0)

Nachweis durch DC-Vergleich mit 8.

12. 1,2-Dehexadecyl-glycerin-3-phosphoryl-(N,N-dimethyl-N-[N',N'-dimethyl]-äthylamino)-äthanolammonium

$C_{43}H_{91}N_2O_6P$ (763,2)

| | | | | |
|---|---|---|---|---|
| Berechnet: | C 37,67%, | H 12,02%, | N 3,67%, | P 4,06%; |
| gefunden: | C 66,93%, | H 11,87%, | N 5,50%, | P 4,11%. |

13. 1,2-Dihexadecyl-glycerin-3-phosphoryl-äthanolhydrazin

$C_{37}H_{79}N_2O_6P$ (679,0)

| | | | | |
|---|---|---|---|---|
| Berechnet: | C 65,45%, | H 11,73%, | N 4,13%, | P 4,56%; |
| gefunden: | C 64,94%, | H 11,80%, | N 3,98%, | P 4,61%. |

14. 1,2-Dimyristoyl-sn-glycerin-3-phosphoryl-(N-hexylamino)-äthanolamin

$C_{43}H_{87}N_2O_8P$ (791,2)

Nachweis durch DC-Vergleich mit 10.

15. 1,2-Dimyristoyl-sn-glycerin-3-phosphoryl-(N-äthylamino)-hexanolamin

$C_{43}H_{87}N_2O_8P$ (791,2)

Nachweis durch DC-Vergleich mit 10.

16. 1,3-Dipalmitoyl-glycerin-2-phosphoryl-(N-[N'-äthylamino]-äthylamino)-äthanolamin

$C_{41}H_{84}N_3O_8P$ (778,1)

| | | | | |
|---|---|---|---|---|
| Berechnet: | C 63,29%, | H 10,88%, | N 5,40%, | P 3,98%; |
| gefunden: | C 63,11%, | H 10,64%, | N 5,60%, | P 4,00%. |

17. Stearoyl-propandiol-(1,3)-phosphoryl-(N,N-dimethyl-N-[N',N',N'-trimethyl]-äthylammonium)-äthanolammonium-chlorid

$C_{30}H_{64}ClN_2O_6P$ (615,3)

| | | | | |
|---|---|---|---|---|
| Berechnet: | C 58,56%, | H 10,49%, | N 4,55%, | P 5,03%; |
| gefunden: | C 60,11%, | H 10,97%, | N 4,85%, | P 5,01%. |

18. Palmitoyl-propandiol-(1,3)-phosphoryl-(N,N-dimethyl-N-[N',N',N'-trimethyl]-äthylammonium)-äthanolammonium-chlorid

$C_{28}H_{60}ClN_2O_6P$ (587,2)

Nachweis durch Dünnschichtchromatographie.

19. 1,2-Dipalmitoyl-sn-glycerin-3-phosphoryl-(N,N-dimethyl-N-[N',N',N'-trimethyl]-äthylammonium)-äthanolammonium-chlorid

$C_{44}H_{90}ClN_2O_8P$ (841,7)

| | | | | |
|---|---|---|---|---|
| Berechnet: | C 62,79%, | H 10,78%, | N 3,33%, | P 3,68%; |
| gefunden: | C 63,33%, | H 10,95%, | N 3,60%, | P 4,11%. |

Beispiel 20

Fusion von Protoplasten

Protoplasten von Pflanzen höherer Zellen wurden nach Takebe, Otsuki und Aoki, Plant. Cell. Physiol. 9, 115 (1968) dargestellt.

$5 \times 10^5$ bis $10^6$ Protoplasten/ml in einem Puffer, 1 mM an erfindungsgemäßem Phospholipid der allgemeinen Formel I, 0,025 M an Citrat (pH 5,8), 0,05 M an $CaCl_2$ und 0,7 M an Mannit werden 20 Minuten stehengelassen und dann zentrifugiert. Vom Überstand wird abdekantiert und das Präzipitat in 1 ml einer Lösung, 0,05 M an $CaCl_2$ und 0,7 M an Mannit, auf eine handelsübliche, zur besseren Haftung von Protoplasten in bekannter Weise oberflächenbehandelte Petrischale (Greiner Nürtingen) gebracht. Nach 30 Sekunden werden unbehandelte Protoplasten dazugegeben. Nach 1 bis 2 Minuten können unter dem Mikroskop spezifische Fusionen beobachtet werden.

**Patentansprüche**

1. Verbindungen der allgemeinen Formel I

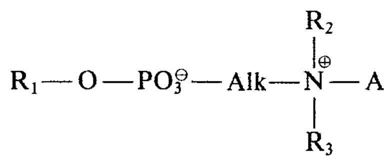

(I)

worin

Alk eine geradkettige, verzweigte oder cyclische Alkylgruppe mit 2 bis 12 C-Atomen,
A die Gruppe

—$NH_2$ oder 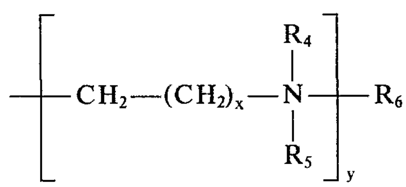

$R_1$ den Rest eines ein- oder mehrwertigen aliphatischen primären oder sekundären Alkohols, dessen gegebenenfalls vorhandene weitere OH-Gruppen verestert oder veräthert vorliegen und die Ester- oder Äthergruppen 1 bis 26 C-Atome und gegebenenfalls eine oder mehrere Kohlenstoff-Mehrfachbindungen enthalten, wobei $R_1$ insgesamt 6 bis 136 C-Atome enthält,
$R_2$, $R_4$ und $R_6$ Wasserstoff oder eine Alkylgruppe mit 1 bis 4 C-Atomen,
$R_3$ und $R_5$ Wasserstoff oder eine Alkylgruppe mit 1 bis 4 C-Atomen oder ein freies Elektronenpaar,
x und y unabhängig voneinander je die Zahl 1, 2, 3, 4 oder 5 bedeuten.

2. Verbindung nach Anspruch 1, dadurch gekennzeichnet, daß die Ester- oder Äthergruppen Alkyl-, Aryl- oder Aralkylgruppen mit 8 bis 22 C-Atomen enthalten.

3. Verbindung nach Anspruch 1 oder 2, dadurch gekennzeichnet, daß $R_1$ sich von Propandiol oder Glycerin ableitet.

4. 1,2-Dipentadecylketon-glycerin-3-phosphoryl-(N-äthylamino)-äthanolamin.

5. Stearoyl-propandiol-(1 3)-phosphoryl-(N,N-dimethyl-N-[N',N'-dimethyl]-äthylamino)-äthanolammonium.

6. 1,2-Dipalmitoyl-sn-glycerin-3-phosphoryl-(N,N-dimethyl-N-[N',N'-dimethyl]-äthylamino)-äthanolammonium.

7. 1,3-Dipalmitoyl-glycerin-2-phosphoryl-(N,N-dimethyl-N-[N',N'-dimethyl]-äthylamino)-äthanolammonium.

8. 1,2-Dihexadecyl-glycerin-3-phosphoryl-(N,N-dimehtyl-N-[N′,N′-dimethyl]-äthylamino)-äthanol-ammonium.

9. Stearoyl-propandiol-(1,3)-phosphoryl-(N,N-dimethyl-N-[N′,N′,N′-trimethyl]-äthylammonium)-äthanolammonium-chlorid.

10. 1,2-Dipalmitoyl-sn-glycerin-3-phosphoryl-(N,N-dimethyl-N-[N′,N′,N′-trimethyl]-äthylammonium)-äthanolammonium-chlorid.

11. Verfahren zur Herstellung einer Verbindung nach Anspruch 1 bis 10, dadurch gekennzeichnet, daß man

a) eine Verbindung der allgemeinen Formel II

$$R_1—OH \quad (II)$$

in der $R_1$ die in Anspruch 1 angegebene Bedeutung zukommt, mit $POCl_3$ in an sich bekannter Weise umsetzt,

b) das Reaktionsprodukt von Stufe a) in an sich bekannter Weise mit einer Verbindung der allgemeinen Formel III

$$HO—Alk—Hal \quad (III)$$

in der Hal Cl, Br oder J bedeutet und Alk die in Anspruch 1 angegebene Bedeutung hat, umsetzt,

c) das Reaktionsprodukt von Stufe b) mit einer Verbindung der allgemeinen Formel IV

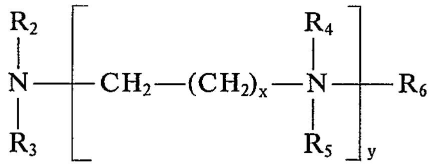

(IV)

in der $R_2$, $R_3$, $R_4$, $R_5$, $R_6$, x und y die in Anspruch 1 angegebene Bedeutung haben, oder mit Hydrazin umsetzt, und gegebenenfalls

d) die erhaltene Verbindung der allgemeinen Formel I, in der $R_3$ oder/und $R_5$ ein freies Elektronenpaar bedeuten, mit einem Alkylierungsmittel peralkyliert.

12. Verfahren nach Anspruch 11, dadurch gekennzeichnet, daß man in Tetrahydrofuran in Gegenwart einer verdünnten wäßrigen Alkalicarbonatlösung peralkyliert.

13. Verfahren nach Anspruch 12, dadurch gekennzeichnet, daß die Alkylierung des freien Elektronenpaars mit 0,5 molarer wäßriger Natriumbicarbonatlösung durchgeführt wird.

**Claims**

1. Compounds of the general formula:

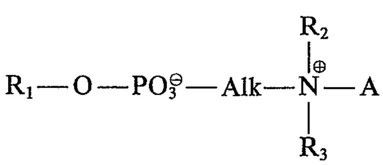

(I)

where

Alk is a straight-chain, branched or cyclic alkyl group having 2 to 12 C-atoms,

A is the group

$—NH_2$ or 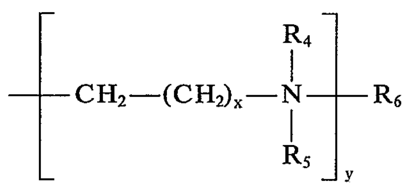

$R_1$ is the radical of a monovalent or multivalent aliphatic primary or secondary alcohol, the possible further OH groups of which are present either esterified or etherified and the

ester- or ether groups contain 1 to 26 C-atoms and optionally one or more carbon multiple bonds, whereby $R_1$ contains in total 6 to 136 C-atoms,

$R_2$, $R_4$ and $R_6$ are hydrogen or an alkyl group with 1 to 4 C-atoms,

$R_3$ and $R_5$ are hydrogen or an alkyl group with 1 to 4 C-atoms or a free electron pair,

x and y each mean independently of one another the numbers 1, 2, 3, 4 or 5.

2. Compound according to claim 1, wherein the ester- or ether-groups contain alkyl-, aryl- or aralkyl groups having 8 to 22 C-atoms.

3. Compound according to claim 1 or 2, wherein $R_1$ is derived from dihydroxypropane or from glycerin.

4. 1,2-dipentadecylketone-glycerin-3-phosphoryl-(N-ethylamino)-ethanolamine.

5. Stearoyl-dihydroxypropane-(1,3)-phosphoryl-(N,N-dimethyl-N-[N',N'-dimethyl]-ethylamino)-ethanolammonium.

6. 1,2-dipalmitoyl-sn-glycerin-3-phosphoryl-(N,N-di-methyl-N-[N'-dimethyl]-ethylamino)-ethanolammonium.

7. 1,3-dipalmitoyl-glycerin-2-phosphoryl-(N,N'-dimethyl-N-[N'-dimethyl]-ethylamino)-ethanolammonium.

8. 1,2-dihexadecyl-glycerin-3-phosphoryl-(N,N-dimethyl-N-[N'-dimethyl]-ethylamino)-ethanolammonium.

9. Stearoyl-dihydroxypropane-(1,3)-phosphoryl-(N,N-dimethyl-N-[N',N'-trimethyl]-ethylammonium)-ethanolammonium-chloride.

10. 1,2-dipalmitoyl-sn-glycerin-3-phosphoryl-(N,N-dimethyl-N-[N',N',N'-trimethyl]-ethylammonium)-ethanolammonium-chloride.

11. Process for the preparation of a compound according to claims 1 to 10 inclusive, whereby:

a) a compound of the general formula II:

$$R_1—OH \qquad (II)$$

in which $R_1$ has the meaning cited in claim 1 above, is reacted with $POCL_3$ in the manner known per se,

b) the reaction product of stage a) is reacted in the manner known per se with a compound of the general formula III

$$HO—Alk—Hal \qquad (III)$$

in which Hal is Cl, Br or J and Alk has the meaning cited in claim 1 above,

c) the reaction product from stage b) above is then reacted with a compound having the general formula IV:

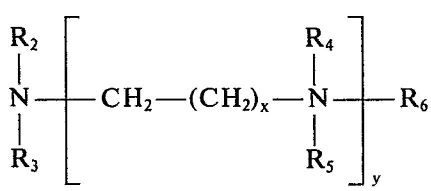

(IV)

in which $R_2$, $R_3$, $R_4$, $R_5$, $R_6$, x and y have the meanings cited in claim 1 above, or with hydrazine, and optionally

d) the compound thus obtained of the general formula I, in which $R_3$ and/or $R_5$ are a free electron pair is peralkylated with an alkylating agent.

12. Process according to claim 11 characterized by peralkylating in tetrahydrofuran in the presence of a diluted, aqueous alkali carbonate solution.

13. Process according to claim 12 wherein the alkylation of the free electron pair is effected with 0,5 molar aqueous sodium bicarbonate solution.

**Revendications**

1. Composé de formule générale I:

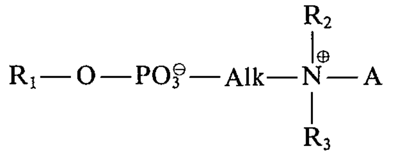

(I)

dans laquelle:

| | |
|---|---|
| Alk | représente un groupe alcoyle à chaîne droite, ramifiée ou cyclique avec 2 à 12 atomes de C, |
| A | représente le groupe |

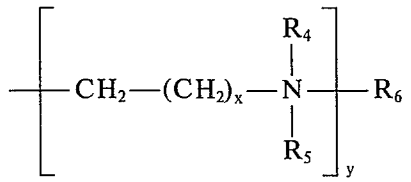

| | |
|---|---|
| $R_1$ | représente le reste d'un alcool aliphatique primaire ou secondaire mono- ou poly-valent dont les autres groupes OH éventuellement présents sont à l'état estérifié ou éthérifié et les groupes ester ou éther contiennent 1 à 26 atomes de C et le cas échéant une ou plusieurs liaisons carbonées multiples, $R_1$ contenant au total 6 à 136 atomes de C, |
| $R_2$, $R_4$ et $R_6$ | représentent l'hydrogène ou un groupe alcoyle avec 1 à 4 atomes de C, |
| $R_3$ et $R_5$ | représentent l'hydrogène ou un groupe alcoyle avec 1 à 4 atomes de C ou une paire d'électrons libre, |
| x et y | représentent chacun, indépendamment l'un de l'autre, le nombre 1, 2, 3, 4 ou 5. |

2. Composé selon la revendication 1, caractérisé en ce que les groupes ester ou éther contiennent des groupes alcoyle, aryle ou aralcoyle avec 8 à 22 atomes de C.
3. Composé selon la revendication 1 ou 2, caractérisé en ce que $R_1$ dérive du propanediol ou du glycérol.
4. La 1,2-dipentadécylcétone-glycérol-3-phosphoryl-(N-éthylamino)-éthanolamine.
5. Le stéaroyl-propane-diol-(1,3)-phosphoryl-(N,N-diméthyl-N-[N',N'-diméthyl]-éthylamino)-éthanolammonium.
6. Le 1,2-dipalmitoyl-sn-glycérol-3-phosphoryl-(N,N-diméthyl-N-[N',N'-diméthyl]-éthylamino)-éthanolammonium.
7. Le 1,3-dipalmitoyl-glycérol-2-phosphoryl-(N,N-diméthyl-N-[N',N'-diméthyl]-éthylamino)-éthanolammonium.
8. Le 1,2-dihexadécyl-glycérol-3-phosphoryl-(N,N-diméthyl-N-[N',N'-diméthyl]-éthylamino)-éthanolammonium.
9. Le chlorure de stéaroyl-propane-diol-(1,3)-phosphoryl-(N,N-diméthyl-N-[N',N',N'-triméthyl]-éthylammonium)-éthanolammonium.
10. Le chlorure de 1,2-dipalmitoyl-sn-glycérol-3-phosphoryl-(N,N-diméthyl-N-[N',N',N'-triméthyl]-éthylammonium)-éthanolammonium.
11. Procédé de préparation d'un composé selon les revendications 1 à 10, caractérisé en ce que:

a) on fait réagir de manière connue en soi un composé de formule générale II:

$$R_1—OH \qquad (II)$$

dans laquelle $R_1$ a la signification indiquée dans la revendication 1, avec $POCl_3$,

b) on fait réagir le produit de réaction du stade a), de manière connue en soi, avec un composé de formule générale III:

$$HO—Alk—Hal \qquad (III)$$

dans laquelle Hal représente Cl, Br ou I et Alk a la signification indiquée dans la revendication 1,

c) on fait réagir le produit de réaction du stade b) avec un composé de formule générale IV:

$$\begin{array}{l} R_2 \\ | \\ N-[CH_2-(CH_2)_x-N]_y-R_6 \\ | \\ R_3 \end{array} \qquad (IV)$$

dans laquelle $R_2$, $R_3$, $R_4$, $R_5$, $R_6$, x et y ont les significations indiquées dans la revendication 1, ou avec l'hydrazine, et le cas échéant

d) on soument le composé obtenu de furmule générale I dans laquelle $R_3$ et/ou $R_5$ représentent une paire d'électrons libre, à peralcoylation à l'aide d'un agent alcoylant.

12. Procédé selon la revendication 11, caracterisé en ce qu'on soumet à peralcoylation en tetrahydrofuran en présence d'une solution diluée aqueuse de carbonate alcalin.

13. Procédé selon la revendication 12, caracterisé en ce que l'alcoylation de la paire d'électrons libre s'effectue avec 0,5 de solution molaire aqueuse de bicarbonate de sodium.